# EUROPEAN PATENT APPLICATION

(11) **EP 4 759 863 A1**
(43) Date of publication of application: **17.06.2026**
(21) Application number: 25203547.2
(22) Date of filing: 22.09.2025
(51) Int. Cl.: C08G 65/40, C08L 71/00, H01B 3/42, H01B 13/14

(54) **INSULATED WIRE AND PREPARATION METHOD THEREOF, COIL AND ELECTRONIC/ELECTRICAL DEVICE**

(30) Priority: 11.12.2024 CN 202411815860
(71) Applicant: Well Ascent Electronic (Ganzhou) Co., Ltd., Ganzhou, Jiangxi 341000 (CN)
(72) Inventor: LI, Jian, Ganzhou (CN); ZHU, Yuejia, Ganzhou (CN); ZHU, Zuomao, Ganzhou (CN)
(74) Representative: Huang, Liwei

(57) **Abstract**

Provided are an insulated wire and a preparation method thereof, a coil and an electronic/electrical device. The insulated wire includes a conductor and an insulation layer arranged on an outer periphery of the conductor, where a material of the insulation layer is obtained by mixing and pelletizing resin A and resin B. A material obtained by mixing contains units as shown in Formulae 1-3: 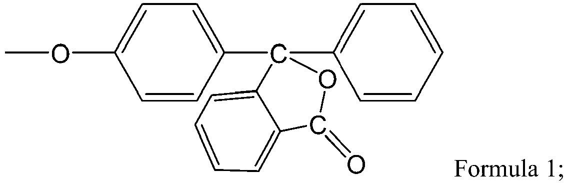 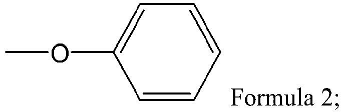 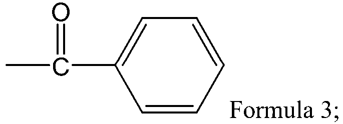 where a molar proportion of the unit shown in Formula 1 is 3%-17%, a molar proportion of the unit shown in Formula 2 is 37%-77%, and a molar proportion of the unit shown in Formula 3 is 20%-47%. The present invention can improve the adhesion between pure PEEK resin and copper conductor and enhance the flexibility of the insulation material.

## Description

### CROSS-REFERENCE TO RELATED APPLICATIONS

The present application claims the right of priority for Chinese Patent Application No. 202411815860.0, filed with the China National Intellectual Property Administration on December 11, 2024, which is incorporated herein by reference in its entirety.

### TECHNICAL FIELD

The present invention relates to the technical field of insulated wires, and in particular to an insulated wire and a preparation method thereof, a coil and an electronic/electrical device.

### BACKGROUND

At present, due to highly efficient charging capabilities and outstanding range performance, 800V high-voltage drive systems have become the preferred choice in the field of new energy vehicles. However, with the increase in voltage level, more stringent requirements are imposed on insulating materials. In high-voltage and high-temperature operating environments, insulated wires must maintain excellent insulation performance to ensure the safe and reliable operation of the electrical systems.

In the prior art, polyether ether ketone (PEEK) is known as a resin with excellent electrical insulation performance. Its volume resistivity is about 1015-1016Ω•cm, and it maintains a low dielectric constant and low dielectric loss even in high-frequency ranges. For example, at room temperature and a frequency of 104HZ, PEEK exhibits a dielectric constant of about 3.2 and a dielectric loss of only 0.02. In addition, PEEK resin exhibits excellent heat resistance, mechanical strength, chemical stability, as well as exceptional resistance to hot water and steam. Therefore, PEEK resin is considered an ideal insulation material for electromagnetic wires.

However, due to strong chemical resistance, PEEK resin is insoluble in general organic solvents, making it unsuitable for processing into coatings for the electromagnetic wires. As a result, it can only be applied to electromagnetic wires through high-temperature melt extrusion. Nevertheless, the high melt viscosity and fast cooling rate of PEEK resin often result in unstable bonding between the PEEK coating and the copper surface of the electromagnetic wires, posing the risks of detachment and cracking. Furthermore, PEEK resin also suffers from relatively poor flexibility.

### SUMMARY

In view of the above, one objective of the present invention is to provide an insulated wire to improve the adhesion and flexibility of insulation materials in the prior art.

To achieve the above objectives, the present invention provides the following technical solutions:
an insulated wire including a conductor and an insulation layer arranged on an outer periphery of the conductor, where a material of the insulation layer is obtained by mixing and pelletizing two types of resins, referred to as resin A and resin B. A material obtained by mixing contains units as shown in Formulae 1-3: 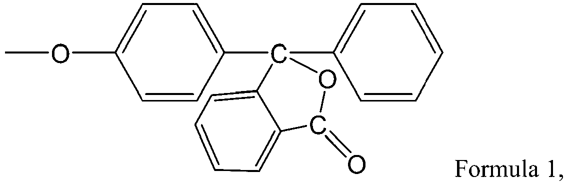 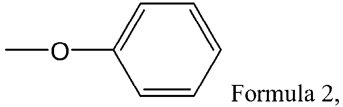 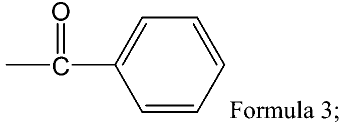 where a molar proportion of the unit shown in Formula 1 is 3%-17%, a molar proportion of the unit shown in Formula 2 is 37%-77%, and a molar proportion of the unit shown in Formula 3 is 20%-47%.

Further, a crystallinity of the material is 15%-26%.

Further, the resin A is polyether ether ketone (PEEK).

Further, a structural formula of the PEEK is shown in Formula 4: 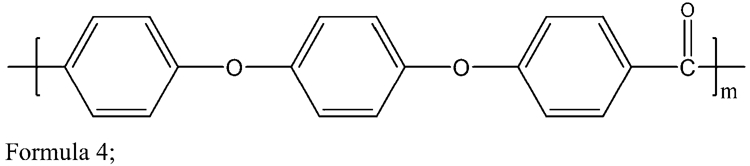 where m is 50-200.

Further, the resin B is phenolphthalein-based polyaryl ether ketone (PEK-C).

Further, a structural formula of the PEK-C is shown in Formula 5: 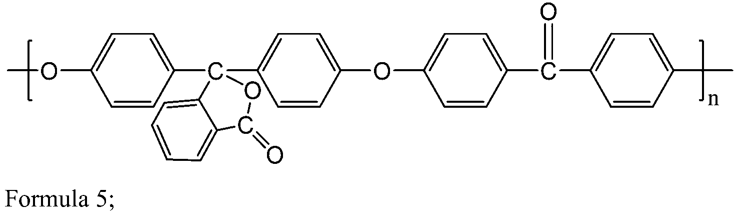 where n is 50-150, and preferably 50-100.

PEK-C, also known as phenolphthalein-type polyaryl ether ketone, refers to a polymer material formed by linking phenolphthalein rings through ether bonds and carbonyl groups. PEK-C has the advantages of high modulus, high strength, good impact resistance, excellent thermal stability, outstanding electrical insulation, corrosion resistance, and dimensional stability. Therefore, it is widely used in high-performance composites, water treatment, electronics and electrical apparatuses, aerospace, automobile manufacturing, and rail transportation.

In the present invention, by incorporating an appropriate amount of PEK-C resin into PEEK resin, the adhesion, flexibility, and static friction coefficient of the overall insulation layer are effectively improved.

In the present invention, the PEK-C has a tensile strength of 94-100 MPa, a tensile modulus of 2.4-2.8 GPa, a flexural strength of 132-150 MPa, and a flexural modulus of 2.7-3.1 GPa.

In specific mixing, a mass of the PEK-C accounts for 10%-49%, and a mass of PEEK accounts for 51% -90%.

The PEK-C in Formula 5 may be a commercially available product, such as the PEK-C (with an Mw of approximately 52,000) produced by Xuzhou Engineering Plastics Factory, China Changchun Institute of Applied Chemistry Chinese Academy of Sciences.

Alternatively, PEK-C may be synthesized in the laboratory. Phenolphthalein and dichlorobenzophenone are mixed in an equivalent ratio in a mixed solvent of N,N-Dimethylacetamide (DMAC) and ethylbenzene. Under alkaline catalytic conditions, the mixture is subjected to a reaction at a gradually increased temperature from 150°C to 200°C for 2 h. After reaction, a viscosity of the system is about 1.1 dL/g, and a weight-average molecular weight (Mw) is about 50,000.

Another objective of the present invention is to provide a preparation method of the insulated wire described above, including the steps: mixing PEEK resin and PEK-C resin in a predetermined weight ratio, and stirring to ensure uniform distribution of the PEEK resin and the PEK-C resin and form blended resin; feeding the blended resin into a barrel of a twin-screw extruder, heating to a temperature of 370-400°C to achieve a molten state, and blending through the twin-screw extruder; after cooling, pelletizing into pellets with a diameter of 2-3 mm using a pelletizer to obtain blended resin material, that is, a material of the insulation layer; and then applying a coating of the blended resin material onto an outer periphery of the conductor.

The material of the PEEK resin is pellets with a diameter of 2-3 mm, a glass transition temperature (Tg) of 143°C and a melting point (Tm) of 334°C.

The material of the PEK-C resin is also pellets with a diameter of 2-3 mm, a glass transition temperature (Tg) of 230-232°C and a thermal decomposition temperature above 450°C.

The blended resin material (i.e., the insulation material of the wire) is fed into a single-screw extruder, heated to 370-400°C to achieve a molten state, extruded onto the conductor, and cooled to form the insulation layer.

The conductor can be preheated prior to coating, with a preheating temperature of 280-330°C.

Yet another objective of the present invention is to provide a coil formed from the insulated wire described above.

Still another objective of the present invention is to provide an electrical or electronic device prepared from the coil described above.

Compared with the prior art, the present invention has the following advantages:

When used to form an insulation layer of the wire, the wire insulation material provided by the present invention improves the adhesion between pure PEEK resin and copper conductor and enhances the flexibility of the insulation material. Moreover, since both PEK-C and PEEK belong to the polyaromatic ketones, and have the same ether bonds and ketone groups, they exhibit good compatibility, which helps improve the overall strength and stability of the blended material.

Furthermore, PEK-C has a lower coefficient of static friction, resulting in a smoother surface of the insulation layer, making it easier to insert into a stator and avoiding abrasion with the stator during use.

### DETAILED DESCRIPTION OF EMBODIMENTS

Many specific details are set forth in the following description to facilitate thorough understanding of the present invention. However, the present invention may be implemented in many other ways different from those described herein, similar improvements may be made by those skilled in the art without departing from the connotation of the present invention, and therefore the present invention is not limited by the specific embodiments disclosed below.

Unless otherwise defined, all technical and scientific terms mentioned herein have the same meaning as commonly understood by those skilled in the technical field of the present invention. Terms mentioned in the description of the present invention are used only for the purpose of describing specific embodiments, and are not intended to limit the present invention.

### Example 1: (Conductor dimensions: 1.90 × 2.90 mm)

This example provides an insulated wire including a conductor and an insulation layer arranged on an outer periphery of the conductor. A material of the insulation layer was obtained by mixing and pelletizing polyether ether ketone (PEEK) and phenolphthalein-based polyaryl ether ketone (PEK-C). Specifically, a structural formula of the PEEK is shown in Formula 4:

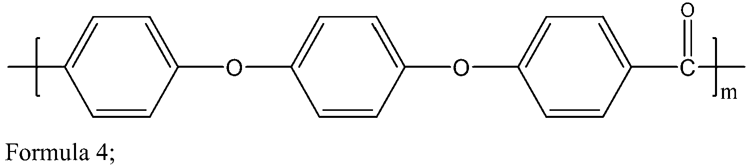

A structural formula of the PEK-C is shown in Formula 5: 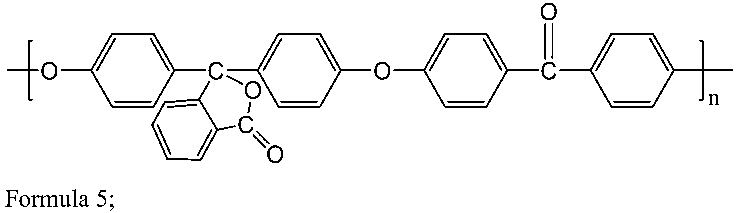 where n is 150, and m is 100.

A mass percentage of the PEEK was 90%, a mass percentage of PEK-C was 10%, and a crystallinity of the insulation layer was 26%.

During coating, a total thickness of the insulation layer was 100 µm.

### Example 2

This example is substantially the same as Example 1, except that a mass percentage of the PEEK was 80%, a mass percentage of PEK-C was 20%, and a crystallinity of the insulation layer was 23%.

### Example 3

This example is substantially the same as Example 1, except that a mass percentage of the PEEK was 70%, a mass percentage of PEK-C was 30%, and a crystallinity of the insulation layer was 20%.

### Example 4

This example is substantially the same as Example 1, except that a mass percentage of the PEEK was 60%, a mass percentage of PEK-C was 40%, and a crystallinity of the insulation layer was 17%.

### Example 5

This example is substantially the same as Example 1, except that a mass percentage of the PEEK was 51%, a mass percentage of PEK-C was 49%, and a crystallinity of the insulation layer was 15%.

### Comparative Example 1

This example is substantially the same as Example 1, except that a mass percentage of the PEEK was 40%, a mass percentage of PEK-C was 60%, and a crystallinity of the insulation layer was 12%.

### Comparative Example 2

This example is substantially the same as Example 1, except that a mass percentage of the PEEK was 20%, a mass percentage of PEK-C was 80%, and a crystallinity of the insulation layer was 6%.

### Comparative Example 3

This example is substantially the same as Example 1, except that a mass percentage of the PEEK was 100%, a mass percentage of PEK-C was 0%, and a crystallinity of the insulation layer was 29%.

### Performance test

The insulated wires prepared in Examples 1-5 and Comparative Examples 1-3 were subjected to the following tests:

### 1. Adhesion test

The adhesion test was carried out in accordance with Test Method 8 in IEC 60851-3:2019, with specific steps as follows:

A 300 mm sample of each insulated wire prepared in the examples and comparative examples was taken. A circle of the sample was cut in a middle position thereof down to the conductor. The sample was then placed between two clamps, the sample and the clamp were placed on a same axis, both ends were clamped for fixation, the sample was then stretched by 15% at a rate of 300 mm/min. The length of the insulation layer of the coating film that lost adhesion was then measured.

### 2. Flexibility test

The insulated wires prepared in the examples and comparative examples were subjected to the flexibility test according to the following methods.

The flexibility test was carried out in accordance with Test Method 8 in IEC 60851-3:2019, with specific steps as follows:

Two straight insulated wires, each 500 mm in length, were taken. Each insulated wire was bent 180° ± 2° around a polished test mandrel. One insulated wire was subjected to flat-wise bending (mandrel diameter = twice the wire thickness), and the other insulated wire was subjected to edge-wise bending (mandrel diameter = twice the wire width). In this test, the insulated wires with a smooth surface and without visible cracks after flat-wise bending and edge-wise bending were rated as "qualified," and wires with surface cracks were rated as "Unqualified."

Test results are shown in the table below:

| Conductor dimensions: 1.9×2.9 (mm) | Thickness of insulation layer (µm) | PEEK (mass percentage %) | PEK-C (mass percentage %) | Length losing the adhesion (mm) | Crystallinity (%) | Flexibility test (Edge-wise bending) | Flexibility test (Flat-wise bending) |
|---|---|---|---|---|---|---|---|
| **Example 1** | 100 | 90 | 10 | 1.52 | 26 | Qualified | Qualified |
| **Example 2** | 120 | 80 | 20 | 1.43 | 23 | Qualified | Qualified |
| **Example 3** | 80 | 70 | 30 | 1.36 | 20 | Qualified | Qualified |
| **Example 4** | 100 | 60 | 40 | 1.25 | 17 | Qualified | Qualified |
| **Example 5** | 100 | 51 | 49 | 0.92 | 15 | Qualified | Qualified |
| **Comparative Example 1** | 100 | 40 | 60 | 0.88 | 12 | Unqualified | Qualified |
| **Comparative Example 2** | 100 | 20 | 80 | 0.72 | 6 | Unqualified | Unqualified |
| **Comparative Example 3** | 100 | 100 | 0 | 1.82 | 29 | Unqualified | Qualified |

It can be seen from the test results that, compared with the insulation materials made solely of PEEK resin, the insulated wire provided by the present invention exhibits improved performance due to the addition of an appropriate amount of PEK-C and the insulating material obtained by blending and granulating process. On one hand, adhesion of the insulated wire to the conductor is improved; on the other hand, the flexibility of the insulated wire is improved, thereby effectively improving the adhesion and flexibility of the pure PEEK resin.

Various technical features of the embodiments mentioned above may be arbitrarily combined. In order to simplify the description, all possible combinations of the various features of the embodiments mentioned above are not described. However, if only the combinations of these technical features do not conflict, they should be considered to be within the scope of description of the present invention.

The embodiments mentioned above are merely several embodiments of the present invention, and are specifically described in details, but cannot be interpreted as limiting the scope of the patent for the present invention as a result. It shall be noted that for those of ordinarily skilled in the art, they may make several transformations and improvements on the premise without deviating from concepts of the present invention, these transformations and improvements should be considered to fall within the protection scope of the present invention. Hence, the protection scope of the patent for the present invention should be subject to the appended claims.

## Claims

1. An insulated wire, **characterized by** comprising: a conductor and an insulation layer arranged on an outer periphery of the conductor, wherein a material of the insulation layer is obtained by mixing and pelletizing resin A and resin B; and the material obtained after mixing comprises units as shown in Formulae 1-3: 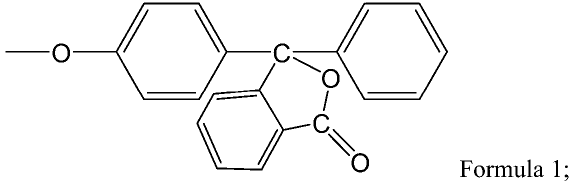 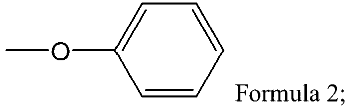 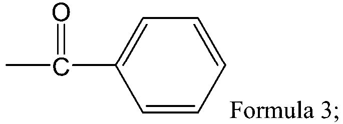
wherein a molar proportion of the unit shown in Formula 1 is 3%-17%, a molar proportion of the unit shown in Formula 2 is 37%-77%, and a molar proportion of the unit shown in Formula 3 is 20%-47%;
a crystallinity of the material is 15%-26%;
the resin A is polyether ether ketone, PEEK; and
the resin B is phenolphthalein-based polyaryl ether ketone, PEK-C.

2. The insulated wire of claim 1, **characterized in that** a structural formula of the PEEK is shown in Formula 4: 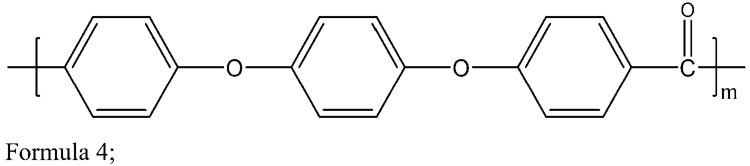 wherein m is 50-200.

3. The insulated wire of claim 1, **characterized in that** a structural formula of the PEK-C is shown in Formula 5: 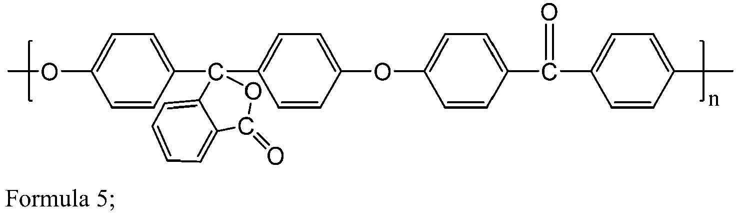 wherein n is 50-150.

4. A preparation method of the insulated wire of any one of claims 1-3, **characterized by** comprising the steps:
mixing PEEK resin and PEK-C resin in a predetermined weight ratio,
stirring to ensure uniform distribution of the PEEK resin and the PEK-C resin, so as to form a blended resin;
feeding the blended resin into a barrel of a twin-screw extruder,
heating to a temperature of 370-400°C to achieve a molten state,
blending via the twin-screw extruder to form a uniform mixing system;
after cooling, pelletizing into pellets with diameters of 2-3 mm by using a pelletizer to obtain blended resin material, which is a material for the insulation layer;
applying a coating of the blended resin material on an outer periphery of the conductor.

5. A coil, **characterized in that** the coil is formed from the insulated wire of any one of claims 1-3.

6. An electronic/electrical device, **characterized by** comprising the coil of claim 5.
